# FASCICULE DE BREVET EUROPEEN

(11) **EP 0 900 542 B1**
(45) Date de publication et mention de la délivrance du brevet: **26.11.2003**
(21) Numéro de dépôt: 98402161.8
(22) Date de dépôt: 01.09.1998
(51) Int. Cl.: A47J 31/053

(54) **Appareil à infuser**
Brühgerät
Brewing device

(30) Priorité: 02.09.1997 FR 9710908
(43) Date de publication de la demande: 10.03.1999
(73) Titulaire: SEB S.A., 69130 Ecully (FR)
(72) Inventeur: Gaulard, Hervé, 39700 Courtefontaine (FR)
(74) Mandataire: Keib, Gérard

(56) Documents cités:
- DE-A- 2 005 438
- GB-A- 982 553
- US-A- 1 573 668
- US-A- 1 743 342
- US-A- 1 995 081
- US-A- 3 429 255

## Description

La présente invention concerne un appareil à infuser.

D'après le document DE-A-2 005 438, on connaît un appareil à infuser du type comprenant un récipient pour contenir un liquide, un tube s'étendant dans le récipient, un panier formant filtre adapté à contenir une matière à infuser, disposé à une partie supérieure du récipient, et auquel est fixé le tube, une chambre de pompe thermique formée par un couvercle à l'intérieur de laquelle débouche l'extrémité inférieure du tube, un dispositif de valve comprenant au moins une ouverture traversante formée dans le couvercle et une rondelle reliée au tube sous le couvercle, le dispositif de valve étant adapté à réguler le passage du liquide du récipient dans la chambre en fonction de la pression régnant dans la chambre, l'appareil à infuser comprenant une bague comportant des lumières adaptées à venir en regard avec des orifices réalisée dans le couvercle, la bague étant montée en rotation sur le couvercle entre une position fermée dans laquelle les orifices sont obturés par la bague et une portion ouverte dans laquelle les orifices sont en regard des lumières.

Les appareils à infuser conforme à ce document ont l'inconvénient majeur de pouvoir être difficilement détartrés, inconvénient d'autant plus gênant que le dispositif de valve qui est utilisé est très sensible à la présence de tartre.

En effet, ces appareils à infuser possèdent une chambre de pompe thermique constituée par une petite cavité formée dans le fond du récipient. Or, cette cavité qui est profonde et de petit diamètre est très difficilement accessible ce qui rend son nettoyage et détartrage peu aisés, et entraîne une accumulation de tartre.

De plus, le dispositif de valve est une rondelle qui est montée en translation autour du tube dans la chambre. or le dépôt de calcaire entre le tube et la rondelle peut rapidement gêner, voire empêcher le coulissement de la rondelle, rendant ainsi inefficace le dispositif de valve.

En outre, la petite taille de la cavité ne permet pas de chauffer une grande quantité d'eau et ne permet donc pas d'obtenir une infusion rapide. De plus, la configuration de la partie inférieure des parois latérales du couvercle (qui est située dans la cavité sous l'ouverture inférieure du tube mais au-dessus de la partie supérieure des parois latérales de la cavité réalisée dans le fond du récipient) empêche un écoulement aisé de l'eau vers l'ouverture du tube, notamment de l'eau située entre la partie supérieure des parois latérales de la cavité et la partie inférieure des parois latérales du couvercle, qui est justement adjacente aux moyens de chauffage.

On connaît aussi un appareil à infuser, par la demande de brevet français n°96 08 169 déposée au nom de la Demanderesse, l'appareil comprenant un récipient pour contenir un liquide, un tube s'étendant dans le récipient entre le fond du récipient et un panier formant filtre dans lequel est placée la matière à infuser, ce panier étant fixé autour du tube dans une partie supérieure du récipient.

Une pompe thermique est constituée par une petite cavité formée dans le fond du récipient. Le tube débouche au sommet de cette cavité et comporte deux rondelles formant valve pour réguler le passage du liquide dans la cavité en fonction de la pression régnant dans cette cavité.

Le liquide monte, sous l'effet de la pression, dans le tube et arrose la matière à infuser disposée dans le filtre, l'infusion étant ensuite recueillie dans le récipient.

Dans cette réalisation, la forme de la cavité, profonde et de petit diamètre présente l'inconvénient d'être très difficile à nettoyer, le tartre s'accumulant dans cette cavité.

On connaît également un appareil à infuser, décrit dans le brevet GB 1 018 882, dans lequel une chambre de pompe thermique est définie par le fond du récipient, en forme de cuvette évasée, et un élément en forme de disque obturant cette cuvette.

Cependant, la forme de la cuvette présente l'inconvénient de créer sur le fond du récipient des zones susceptibles d'être surchauffées si l'eau est seulement présente dans le fond de la cuvette.

En outre, la chambre ainsi formée est de très petite dimension, sensiblement en forme de disque, ce qui ne favorise pas la montée de l'eau dans le tube central.

Par ailleurs, dans ces appareils à infuser connus, il est impossible de réguler le volume d'eau montant dans le tube et arrosant la matière à infuser, et donc de contrôler l'infusion obtenue.

La force de l'infusion peut seulement être contrôlée en modifiant le volume d'eau et la quantité de matière à infuser placée dans le filtre.

En outre, la matière à infuser est arrosée durant toute la durée de fonctionnement de l'appareil alors que certains thés ou tisanes nécessitent une infusion très courte, pour ne libérer que certaines substances de la matière à infuser.

La présente invention a pour but de résoudre les inconvénients précités et de proposer un appareil à infuser avec une pompe thermique améliorée, de nettoyage, de détartrage et de construction simplifiés, offrant en outre une possibilité de réglage du temps de l'infusion.

Selon l'invention, le fond du récipient de l'appareil à infuser du type précité comporte une portion de fond chauffant sensiblement plane sous laquelle sont disposés des moyens de chauffage, le couvercle est en forme de cloche et est disposé sur la portion de fond chauffant, et la rondelle est en matériau souple déformable et est fixée au tube.

La forme de la chambre de pompe thermique permet de résoudre les problèmes de détartrage du fond chauffant du récipient, ce fond ne comportant aucun orifice ou creux dans lesquels le tartre est susceptible de s'accumuler.

En outre, la forme en cloche du couvercle de la chambre de pompe thermique permet de définir une chambre de dimension suffisamment importante pour obtenir une infusion rapide.

Cette forme en cloche favorise également la montée du liquide sous pression dans le tube débouchant dans le couvercle.

La rondelle souple offre une bonne étanchéité et la fermeture des ouvertures du dispositif de valve est obtenue par simple déformation de la rondelle sous l'effet de la pression régnant dans la chambre de pompe thermique.

Cette rondelle souple évite d'utiliser, comme dans les dispositifs de l'art antérieur, une rondelle montée en translation sur le tube.

Le système de réglage par bague rotative autour du couvercle en forme de cloche présente l'avantage de pouvoir régler la quantité d'eau introduite dans la chambre de pompe thermique, autrement que par le seul dispositif de valve.

Il permet de retarder le début de l'infusion et de faire varier le temps d'infusion pour des quantités d'eau et de matière à infuser fixées.

D'autres particularités et avantages de l'invention apparaîtront encore dans la description ci-après.

Aux dessins annexés, donnés à titre d'exemples non limitatifs:
- la figure 1 est une vue en coupe tronquée d'une chambre de pompe thermique d'un appareil à infuser conforrne à l'invention;
- la figure 2 est une vue en perspective éclatée d'un appareil à infuser conforme à l'invention, sans son récipient;
- la figure 3 est une vue en perspective de la chambre de pompe thermique de la figure 1, sans le récipient à infuser; et
- la figure 4 est une vue de dessus de la chambre de pompe thermique de la figure 3.

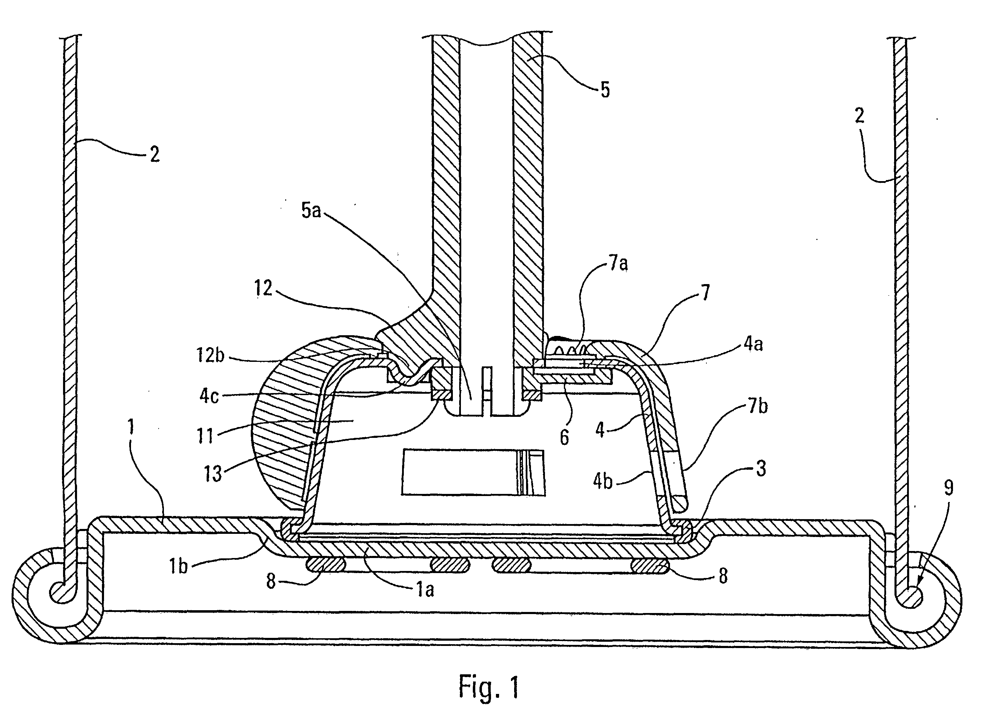

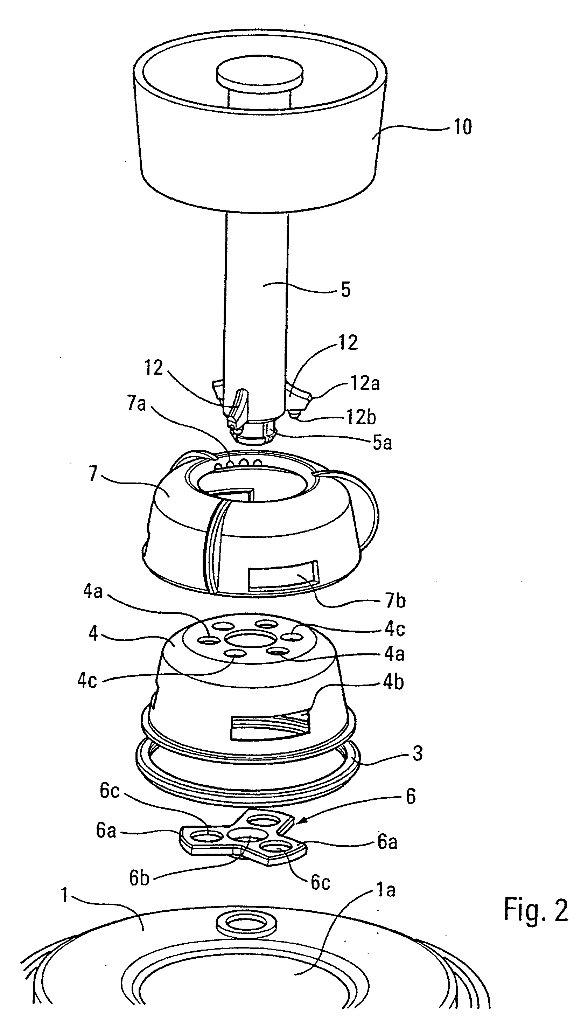

En référence tout d'abord aux figures 1 et 2, un appareil à infuser comprend un récipient 2 pour contenir un liquide avec un fond 1.

Dans cette réalisation, le récipient 2 est monté de manière amovible sur le fond 1 et est maintenu plaqué sur ce fond au moyen d'un joint tel que décrit par exemple dans la demande de brevet 96 08 169.

Un tel appareil à infuser peut être utilisé pour faire du thé.

Un tube 5 s'étend dans le récipient 2 entre le fond 1 du récipient et un panier formant filtre pour recevoir du thé.

.Ce panier 10 est fixé autour du tube 5, dans une partie supérieure du récipient, et à proximité de l'extrémité supérieure du tube 5, de sorte que l'eau, montée sous pression dans le tube, retombe dans le panier 10 et traverse le thé avant de redescendre par gravité dans le récipient 2.

Le fond 1 du récipient comporte une portion de fond chauffant la, plane, des moyens de chauffage 8 étant disposés sous cette portion de fond chauffant 1a.

Ces moyens de chauffage 8 peuvent être une résistance blindée fixée au fond ou encore une résistance surmoulée sur la face inférieure de la portion de fond chauffant 1a.

De préférence, la portion de fond chauffant 1a, et le fond 1, sont réalisés en un métal, par exemple en acier inoxydable ou en aluminium revêtu d'un revêtement compatible avec les aliments.

Une chambre de pompe thermique 11 est formée par un couvercle en forme de cloche 4 disposé sur la portion de fond chauffant 1a.

Une extrémité inférieure 5a du tube 5 débouche dans la chambre de pompe thermique 11, par une ouverture créée au sommet du couvercle en forme de cloche 4, en son centre.

Un dispositif de valve est disposé entre le récipient 2 et la chambre 11 afin de réguler le passage de l'eau dans la chambre en fonction de la pression régnant dans cette chambre.

Ce dispositif de valve comporte dans cet exemple, trois ouvertures traversantes 4a formées dans le couvercle en forme de cloche 4, à son sommet, ces ouvertures 4a étant réparties symétriquement autour du tube 5.

Une rondelle 6 en matériau souple, tel qu'en silicone, est fixée sous le couvercle en forme de cloche, en regard des ouvertures traversantes 4a.

Cette rondelle 6 est fixée au tube 5 et comporte dans cet exemple trois languettes 6a disposées en regard des ouvertures 4a.

Comme illustré à la figure 2, cette rondelle 6 est formée de trois languettes 6a s'étendant à partir d'une ouverture traversante centrale 6b adaptée à être glissée sur l'extrémité inférieure 5a du tube 5.

Une rondelle métallique 13 peut parfaire la fixation de la rondelle 6 qui est logée dans une gorge formée à l'extrémité 5a du tube 5.

Les languettes 6a de la rondelle 6 comportent chacune une cavité 6c formées sur la surface de la languette 6a destinée à venir en contact étanche avec le couvercle en forme de cloche 4.

Ces cavités 6c viennent ainsi fermer les ouvertures traversantes 4a du couvercle en forme de cloche 4.

De préférence, un joint d'étanchéité 3 est disposé à la périphérie du couvercle en forme de cloche 4, en contact avec la portion de fond chauffant 1a.

Le fond 1 comporte un épaulement circulaire 1b raccordant le fond 1 à la portion de fond chauffant 1a, le joint annulaire d'étanchéité 3 étant logé contre cet épaulement 1b.

Ce joint 3 permet un démarrage plus rapide de la pompe thermique.

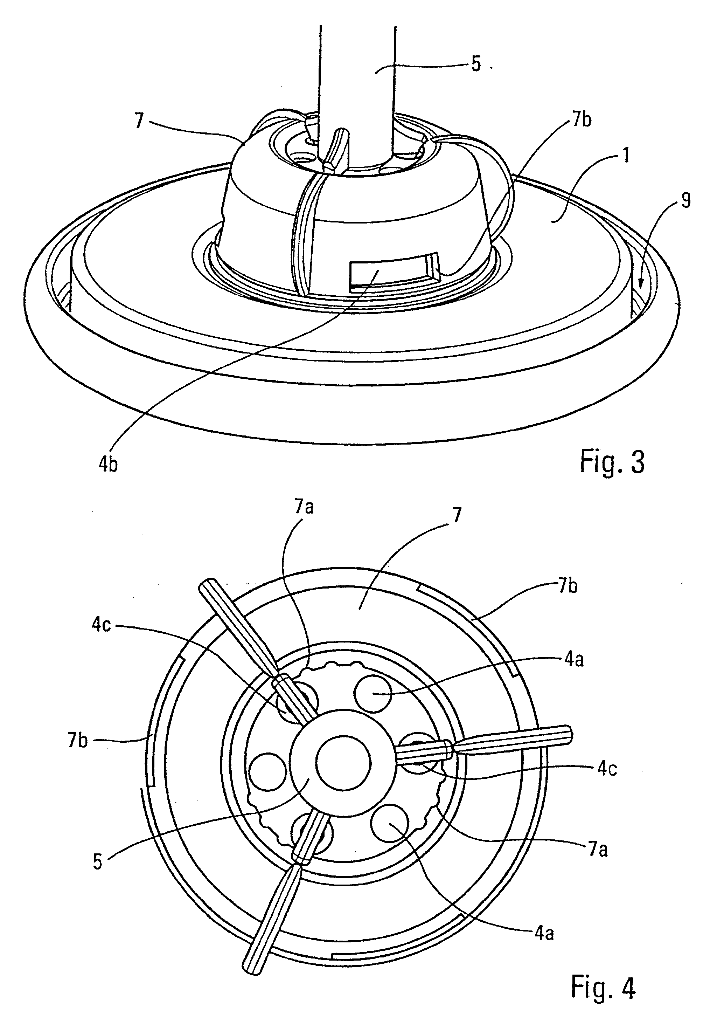

Comme illustré à la figure 3, le couvercle en forme de cloche 4 comporte en outre des orifices 4b, et une bague 7, comportant des lumières 7b adaptées à venir en regard avec ces orifices 4b, est montée à rotation sur le couvercle en forme de cloche 4, entre une position fermée dans laquelle les orifices 4b sont obturée par la bague 7 et une portion ouverte dans laquelle les orifices 4b sont en regard des lumières 7b.

Ces orifices 4b sont disposés à la base du couvercle en forme de cloche 4 et sont dans cet exemple, au nombre de trois, répartis symétriquement par rapport à l'axe du tube 5.

La rotation relative de la bague 7 et du couvercle en forme de cloche 4 permet d'obturer ou d'ouvrir plus au moins les orifices 4b.

Afin d'obtenir un réglage plus précis, le tube 5 peut être orienté sur le couvercle en forme de cloche 4.

Ainsi, le tube 5 est solidaire du couvercle en forme de cloche 4, le tube 5 et la bague 7 comportant des ergots 7a et des encoches 12a adaptées à coopérer pour définir différentes positions relatives en rotation de la bague 7 et du couvercle en forme de cloche 4.

Dans cet exemple, la bague 7 comporte sur une portion d'arc de cercle, quatre ergots 7a définissant quatre positions relatives de la bague 7 et du couvercle en forme de cloche 4.

Des repères sur la bague 7 peuvent permettre d'indiquer le degré d'ouverture des orifices 4a à chaque position.

Le tube 5 comprend au moins un bras radial 12 dont une extrémité comporte une encoche 12a adaptée à coopérer avec les ergots 7a de la bague 7, permettant une orientation par engrenage de chaque ergot 7a dans l'encoche 12a.

Comme mieux illustré à la figure 4, le tube 5 comporte trois bras radiaux 12, répartis symétriquement par rapport à l'axe du tube 5, et la bague 7 comportant trois séries de quatre encoches 7a destinées à coopérer avec chaque extrémité de bras 12 du tube 5.

Afin d'indexer en rotation le tube 5 sur le couvercle en forme de cloche 4, ce dernier comprend au moins une portion en creux 4c sur son sommet, le tube 5 comprenant au moins un bras radial 12 comprenant une portion en saillie 12b adaptée à être logée dans la portion en creux 4c.

Dans cet exemple, le sommet du couvercle en forme de cloche 4 comprend trois portions en creux 4c, disposées entre les ouvertures traversantes 4a, et les trois bras 12 du tube 5, comportent une saillie 12b s'encastrant dans une portion en creux 4c.

En fonctionnement, lorsque les orifices 4b sont totalement obturés, la température du liquide située sous le couvercle en forme de cloche 4 s'élève, le liquide s'y trouvant monte en pression, et plaque la rondelle 6 contre la cloche 4 bouchant ainsi les orifices 4a. Lorsque la pression est suffisante, le liquide monte dans le tube 5, créant ainsi une dépression sous la cloche 4, ce qui a pour effet de décoller la rondelle souple 6 de la cloche 4 et laisser ainsi le passage au liquide pour rentrer sous la cloche par les orifices 4a. Ce cycle continue normalement jusqu' à l'arrêt de l'appareil.

Plus on augmente la surface d'ouverture des orifices 4b en tournant le tube 5 solidaire du couvercle en forme de cloche 4 à l'intérieur de la bague 7, moins le liquide monte rapidement dans le tube 5, ce qui a pour effet de retarder le début de l'infusion. Toutefois, lorsque le système est amorcé, la pompe fonctionne comme précédemment.

Le système de réglage permet donc de retarder le début de l'infusion et de faire varier le temps d'infusion pour une quantité de thé et d'eau fixée.

Bien entendu, de nombreuses modifications peuvent être apportées à l'exemple décrit ci-dessus sans sortir du cadre de l'invention.

Ainsi, la rondelle 6 pourrait être en forme de disque.

Le nombre d'ouvertures traversantes 4a peut varier, à titre d'exemple entre 1 à 6 suivant les besoins.

La bague de réglage 7 peut également être supprimée dans une version simplifiée de l'invention, le couvercle en forme de cloche 4 ne comportant plus d'orifices 4b à sa base.

L'indexation du tube 5 sur le couvercle en forme de cloche 4 peut également être réalisée au moyen de saillies disposées sur le sommet du couvercle en forme de cloche 4 et coopérant avec des cavités réalisées dans les bras 12 du tube 5.

En outre, le système de réglage pourrait être prévu pour faire tourner la bague 7, solidaire du tube 5, autour du couvercle en forme de cloche 4.

## Revendications

1. Appareil à infuser comprenant un récipient (2) pour contenir un liquide, un tube (5) s'étendant dans le récipient (2), un panier formant filtre (10) adapté à contenir une matière à infuser, disposé à une partie supérieure du récipient (2), et auquel est fixé le tube (5), une chambre de pompe thermique (11) formée par un couvercle (4) à l'intérieur de laquelle débouche l'extrémité inférieure (5a) du tube (5), un dispositif de valve (4a, 6) comprenant au moins une ouverture traversante (4a) formée dans le couvercle (4) et une rondelle (6) reliée au tube (5) sous le couvercle (4), le dispositif de valve étant adapté à réguler le passage du liquide du récipient (2) dans la chambre (11) en fonction de la pression régnant dans la chambre (11), l'appareil à infuser comprenant une bague (7) comportant des lumières (7b) adaptées à venir en regard avec des orifices (4b) réalisée dans le couvercle (4), la bague (7) étant montée en rotation sur le couvercle (4) entre une position fermée dans laquelle les orifices (4b) sont obturés par la bague (7) et une portion ouverte dans laquelle les orifices (4b) sont en regard des lumières (7b), **caractérisé en ce que** le fond (1) du récipient (2) comporte une portion de fond chauffant (1a) sensiblement plane sous laquelle sont disposés des moyens de chauffage (8), **en ce que** le couvercle (4) est en forme de cloche et est disposé sur la portion de fond chauffant (1a), et **en ce que** la rondelle (6) est en matériau souple déformable et est fixée au tube (5).

2. Appareil à infuser selon la revendication 1, **caractérisé en ce que** la rondelle (6) est en silicone.

3. Appareil à infuser selon la revendication 1 ou 2, **caractérisé en ce que** ledit couvercle en forme de cloche (4) comporte à son sommet trois ouvertures traversantes (4a) réparties symétriquement autour du tube (5), ladite rondelle (6) comprenant trois languettes (6a) disposées en regard desdites ouvertures (4a) .

4. Appareil à infuser selon l'une des revendications 1 à 3, **caractérisé en ce qu'**un joint d'étanchéité (3) est disposé à la périphérie du couvercle en forme de cloche (4) en contact avec la portion de fond chauffant (1a).

5. Appareil à infuser selon l'une des revendications 1 à 4, **caractérisé en ce que** le tube (5) est solidaire du couvercle en forme de cloche (4), le tube (5) et la bague (7) comportant des ergots (7a) et des encoches (12a) adaptées à coopérer pour définir différentes positions relatives en rotation de la bague (7) et du couvercle en forme de cloche (4).

6. Appareil à infuser selon l'une des revendications 1 à 5, **caractérisé en ce que** les orifices (4b) sont disposés à la base du couvercle en forme de cloche (4).

7. Appareil à infuser selon l'une des revendications 1 à 6, **caractérisé en ce que** le couvercle en forme de cloche (4) comprend au moins une portion en creux (4c) à son sommet, le tube (5) comprenant au moins un bras radial (12) comprenant une portion en saillie (12b) adaptée à être logée dans ladite portion en creux (4c).

## Claims

1. A brewing device, comprising a container (2) for a liquid, a tube (5) extending in the container (2), a basket forming a filter (10) and adapted to contain a material for brewing, disposed at a top part of the container (2) and to which the tube (5) is fixed, a heat pump chamber (11) formed by a cover (4) inside which the bottom end (5a) of the tube (5) opens out, a valve device (4a, 6) comprising at least one through aperture (4a) formed in the cover (4) and a washer (6) connected to the tube (5) beneath the cover (4), the valve device being adapted to control the passage of the liquid from the container (2) into the chamber (11) in dependence on the pressure prevailing in the chamber (11), the brewing device comprising a ring (7) having slots (7b) adapted to come into register with orifices (4b) formed in the cover (4), the ring (7) being mounted for rotation on the cover (4) between a closed position in which the orifices (4b) are closed by the ring (7) and an open position in which the orifices (4b) are in register with the slots (7b), **characterised in that** the base (1) of the container (2) comprises a substantially flat heater base portion (1a) beneath which heating means (8) are disposed, **in that** the cover (4) is bell-shaped and is disposed on the heater base portion (1a), and **in that** the washer (6) is of a deformable flexible material and is fixed to the tube (5).

2. A brewing device according to claim 1, **characterised in that** the washer (6) is of silicone.

3. A brewing device according to claim 1 or 2, **characterised in that** said bell-shaped cover (4) comprises at its top three through apertures (4a) distributed symmetrically around the tube (5), said washer (6) comprising three tongues (6a) disposed in register with the said apertures (4a).

4. A brewing device according to any one of claims 1 to 3, **characterised in that** a gasket (3) is disposed at the periphery of the bell-shaped cover (4) in contact with the heater base portion (1a).

5. A brewing device according to any one of claims 1 to 4, **characterised in that** the tube (5) is secured to the bell-shaped cover (4), the tube (5) and the ring (7) comprising lugs (7a) and notches (12a) adapted to co-operate to define different relative rotated positions of the ring (7) and of the bell-shaped cover (4).

6. A brewing device according to any one of claims 1 to 5, **characterised in that** the orifices (4b) are disposed at the base of the bell-shaped cover (4).

7. A brewing device according to any one of claims 1 to 6, **characterised in that** the bell-shaped cover (4) comprises at least one recessed portion (4c) at its top, the tube (5) comprising at least one radial arm (12) comprising a projecting portion (12b) adapted to be housed in the said recessed portion (4c) .

## Patentansprüche

1. Brühgerät mit einem Behälter (2) zum Aufnehmen einer Flüssigkeit, einem Rohr (5), das sich in den Behälter (2) erstreckt, einem einen Filter (10) bildenden Korb, der einen aufzubrühenden Stoff aufnehmen kann und der an einem oberen Teil des Behälters (2) angeordnet ist und an welchem das Rohr (5) befestigt ist, einer Wärmepumpenkammer (11), die durch einen Deckel (4) gebildet ist und in deren Inneres das untere Ende (5a) des Rohres (5) mündet, einer Ventileinrichtung (4a, 6), die wenigstens eine Queröffnung (4a), die in dem Deckel (4) ausgebildet ist, und eine Scheibe (6) umfasst, die mit dem Rohr (5) unterhalb des Deckels (4) verbunden ist, wobei die Ventileinrichtung den Durchfluss der Flüssigkeit von dem Behälter (2) in die Kammer (11) abhängig von dem Druck regelt, der in der Kammer (11) herrscht, wobei das Brühgerät einen Reif (7) mit Fenstern (7b) umfasst, die den Öffnungen (4b) gegenüberliegend angeordnet werden können, die in dem Deckel (4) realisiert sind, wobei der Reif (7) drehbar an dem Deckel (4) zwischen einer geschlossenen Position, in welcher die Öffnungen (4b) von dem Reif (7) verschlossen sind, und einer geöffneten Position angebracht ist, in welcher die Öffnungen (4b) den Fenstern (7b) gegenüberliegen, **dadurch gekennzeichnet, dass** der Boden (1) des Behälters (2) einen wärmenden Bodenabschnitt (1a) umfasst, der im Wesentlichen eben ist und unter welchem eine Heizeinrichtung (8) angeordnet ist, dass der Deckel glockenförmig ist und auf dem wärmenden Bodenabschnitt (1a) angeordnet ist sowie dass die Scheibe (6) aus einem weichen verformbaren Material gebildet und an dem Rohr (5) befestigt ist.

2. Brühgerät nach Anspruch 1, **dadurch gekennzeichnet, dass** die Scheibe (6) aus Silikon ist.

3. Brühgerät nach Anspruch 1 oder 2, **dadurch gekennzeichnet, dass** der glockenförmige Deckel (4) an seiner Spitze drei Queröffnungen (4a) umfasst, die symmetrisch um das Rohr (5) verteilt angeordnet sind, wobei die Scheibe (6) drei Zungen (6a) umfasst, die gegenüber den Öffnungen (4a) angeordnet sind.

4. Brühgerät nach einem der Ansprüche 1 bis 3, **dadurch gekennzeichnet, dass** eine Dichtung (3) am Umfang des glockenförmigen Deckels (4) in Kontakt mit dem wärmenden Bodenabschnitt (1a) angeordnet ist.

5. Brühgerät nach einem der Ansprüche 1 bis 4, **dadurch gekennzeichnet, dass** das Rohr (5) mit dem glockenförmigen Deckel (4) fest verbunden ist, wobei das Rohr (5) und der Reif (7) Vorsprünge (7a) und Nute (12a) umfassen, die zusammenwirken können, um unterschiedliche Positionen um den Reif (7) und den glockenförmigen Deckel herum zu defmieren.

6. Brühgerät nach einem der Ansprüche 1 bis 5, **dadurch gekennzeichnet, dass** die Öffnungen (4b) an der Basis des glockenförmigen Deckels (4) angeordnet sind.

7. Brühgerät nach einem der Ansprüche 1 bis 6, **dadurch gekennzeichnet, dass** der glockenförmige Deckel (4) an seinem oberen Ende wenigstens einen vertieften Abschnitt (4c) umfasst, wobei das Rohr (5) wenigstens einen radialen Arm (12) aufweist, der einen vorspringenden Abschnitt (12b) umfasst, der in dem vertieften Abschnitt (4c) aufgenommen werden kann.
